# EUROPÄISCHE PATENTANMELDUNG

(11) **EP 1 099 600 A2**
(43) Veröffentlichungstag der Anmeldung: **16.05.2001**
(21) Anmeldenummer: 00124616.4
(22) Anmeldetag: 10.11.2000
(51) Int. Cl.: B60P 7/15

(54) **Ladesicherungssystem**

(30) Priorität: 11.11.1999 DE 29919883 U
(71) Anmelder: Steen, Manfred, 27211 Bassum (DE)
(72) Erfinder: Steen, Manfred, 27211 Bassum (DE)
(74) Vertreter: Eisenführ, Speiser & Partner

(57) **Zusammenfassung**

Die Erfindung betrifft ein Ladesicherungssystem für Laderäume, insbesondere für Kühlladeräume von Fahrzeugen und/oder Containern, mit Befestigungsmitteln (3) im Laderaum, mindestens einer Stange (9), die an zwei gegenüberliegenden Befestigungsmitteln lösbar befestigt ist. Erfindsgemäß wird vorgeschlagen, daß die Befestigungsmittel mit Abläufen (6, 7) versehen sind, welche das Ablaufen oder Abtropfen von Flüssigkeit fördern.

## Beschreibung

Die vorliegende Erfindung betrifft ein Ladesicherungssystem für Laderäume und insbesondere für Kühlladeräume von Fahrzeugen und/oder Containern.

Bei Kühltransporten wie beispielsweise bei Lebensmitteltransporten sind die hygienischen Anforderungen an dem Laderaum sehr hoch, da die transportierten Lebensmittel sonst beeinträchtigt werden könnten. Der Kunde und die staatlichen Überwachungsstellen fordern, dass die Lebensmittel in einem einwandfreien Zustand transportiert werden. Dazu ist es notwendig, dass der Laderaum eines derartigen Transportsystems für Lebensmittel regelmäßig komplett gereinigt und desinfiziert wird. Bei der Entwicklung eines Ladesicherungssystems für Lebensmitteltransporte ist die Tauglichkeit des Systems im Hinblick auf eine einfache und zuverlässige Reinigung des Systems von großer Bedeutung.

Es ist bekannt, eine Ladung in einem Laderaum dadurch zu sichern, dass die Enden einer Stange an zwei Befestigungsmittel befestigt sind, welche an gegenüberliegenden Seitenwänden eines Laderaums angebracht sind. Durch Befestigen der Stangen an den Befestigungsmitteln soll verhindert werden, dass sich die Ladung in dem Laderaum bewegt oder verrutscht.

Die bekannten Befestigungsmittel lassen sich jedoch nicht einfach reinigen, da sie Bereiche aufweisen, in denen sich Flüssigkeit stauen kann. Ein derartiges Stauen von Flüssigkeit genügt jedoch nicht den hohen Hygieneanforderungen für Lebensmitteltransporte, da sich dort Keime und Bakterien bilden können.

Daher liegt der im Patentanspruch 1 angegebenen Erfindung das Problem zugrunde, ein Ladesicherungssystem für Lebensmitteltransporte vorzusehen, das einfach und effektiv gereinigt werden kann.

Dieses Problem wird durch ein Ladesicherungssystem für Laderäume gelöst, das Befestigungsmittel an den Seitenwänden des Laderaums enthält sowie eine Stange, die an zwei gegenüberliegenden Befestigungsmitteln lösbar befestigt ist, wobei die Befestigungsmittel mit Abläufen versehen sind, welche das Ablaufen oder Abtropfen von Flüssigkeit fördern.

Die mit der Erfindung erzielten Vorteile bestehen insbesondere darin, dass sich keine Flüssigkeit in den Befestigungsmitteln stauen, sondern durch die Abläufe abtropfen oder ablaufen kann. Somit kann die Ladung gesichert werden, ohne dabei die Hygiene in dem Laderaum zu vernachlässigen.

Eine weitere Ausgestaltung der Erfindung sieht vor, dass die Befestigungsmittel Ausnehmungen aufweisen, die nach oben und zum Laderaum offen sind, wobei die Enden der Stangen in die Ausnehmungen eingesetzt werden können. Dabei weisen die Ausnehmungen in ihrem unteren Bereich Hinterschnitte und die Stangen je einen länglichen Radialvorsprung an ihren Enden auf. Die Länge des Radialvorsprungs in seiner Längsrichtung ist größer als die Breite der Ausnehmung und die Breite des Radialvorsprungs quer zu seiner Längsrichtung ist kleiner als die Breite der Ausnehmung. Somit können die Stangen in jeder Position der Ausnehmungen eingesetzt werden und durch Drehung der Stange kann dann sichergestellt werden, dass der Radialvorsprung soweit in den Hinterabschnitt hineingedreht wird, dass er die Seitenkanten der Ausnehmung hintergreift, sodass sich die Stange nicht aus den Ausnehmungen lösen kann.

Eine weitere Ausgestaltung der Erfindung sieht vor, dass die Abläufe am unteren Bereich der Ausnehmung angeordnet sind und dass die Abläufe rillenförmig nach unten verlaufen und offen sind. Beim Reinigen der Befestigungsmittel können die Flüssigkeiten somit über die Abläufe leicht nach unten ablaufen.

Ein weitere vorteilhafte Ausgestaltung der Erfindung sieht vor, dass ein Hebel drehfest zur Stange und quer zur Längsrichtung des Radialvorsprungs angebracht ist. Durch das Gewicht des Hebels dreht sich die Stange nachdem Einführen in die Ausnehmungen derart, dass der Radialvorsprung in den Hinterschnitt hineingegreht wird.

Eine bevorzugte Ausgestaltung der Erfindung sieht ferner vor, dass die Stangen je ein Verriegelungsmittel aufweisen, welches einrastet, wenn die Enden der Stange in die Ausnehmung eingeführt und die Stange anschließend in ihre Verriegelungsposition gedreht wird. Das Verriegelungsmittel dient als zusätzlicher Schutz für die Befestigung der Stangen in den Befestigungsmitteln und verhindert, dass die Stange unter den Erschütterungen eines Transportvorganges gedreht wird und sich somit aus der Ausnehmung lösen kann.

Eine weitere Ausgestaltung der Erfindung sieht vor, dass das Verriegelungsmittel einen mittels einer Feder vorgespannten Riegel enthält, der mit einem Entriegelungshebel verbunden ist, wobei der Riegel mit dem Entriegelungshebel in der Querrichtung des Radialvorsprungs vorgesehen ist. Mittels des Entriegelungshebels kann das Verriegelungsmittel entriegelt werden, und die Stange kann aus den Ausnehmungen entfernt werden.

Eine weitere besonders bevorzugte Ausgestaltung der Erfindung sieht vor, dass auf beiden Seiten jeder Ausnehmung an der oberen Kante des Hohlprofils ein Abschnitt vorgesehen ist, der bezüglich der Seitenwand geneigt ist. Dieser geneigte Abschnitt bewirkt, dass das Verriegelungsmittel beim Einführen der Enden der Stange in die Ausnehmung zwangsweise vorzuspannt wird, so dass dies nicht von der Bedienperson erfolgen muss.

Eine weitere vorteilhafte Ausgestaltung der Erfindung sieht vor, dass die Befestigungsmittel als Mittel ausgeführt sind, die im wesentlichen horizontal an den Seitenwänden des Laderaums befestigt sind, und dass die Ausnehmungen in festgelegten horizontalen Abständen angeordnet sind. Die Stange kann in beliebige Ausnehmungen der Befestigungsmittel eingesetzt werden, was eine variable Befestigung der Stangen ermöglicht.

Nachfolgend werden Ausführungsbeispiele der Erfindung in der Zeichnung dargestellt und im folgenden näher beschrieben.

Es zeigen:
- Fig. 1: ein Befestigungsmittel, das an einer Seitenwand des Laderaums angebracht ist;
- Fig. 2: das Befestigungsmittel gemäß Fig. 1 entlang des Schnittes A-A;
- Fig. 3: eine Ansicht der Stange einer ersten Ausführungsform des Ladesicherungssystems von der Stirnseite her gesehen;
- Fig. 4: eine Teilansicht der Stange gemäß Fig. 3, gesehen von vorn;
- Fig. 5: eine Seitenansicht der Stange 9 gemäß Fig. 3, gesehen von vorn;
- Fig. 6: die Stange 9 gemäß Fig. 3, die in den Befestigungsmitteln befestigt ist,

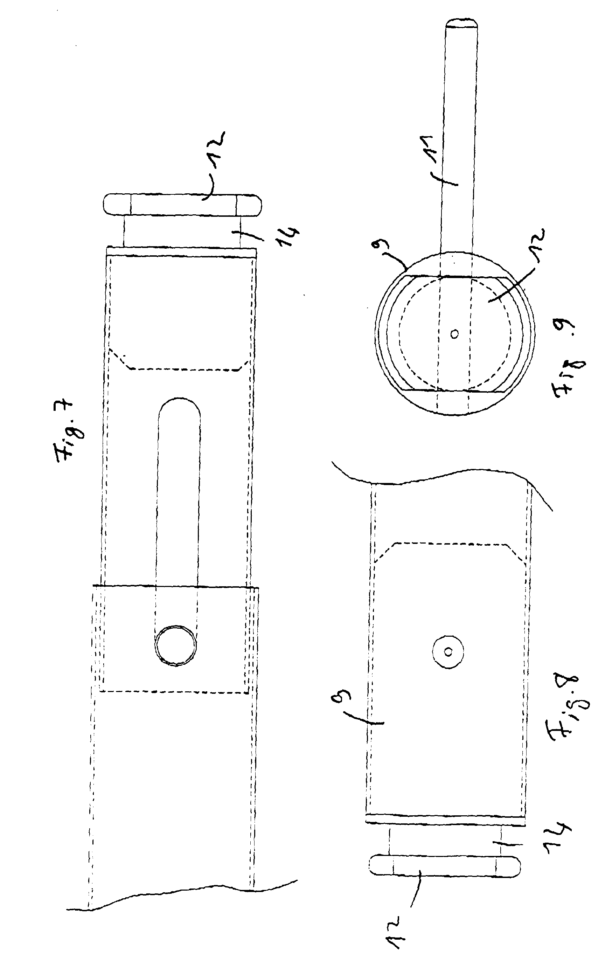

- Fig. 7: eine Seitenansicht einer zweiten Ausführungsform der Stange, gesehen von vorn;
- Fig. 8: eine Teilansicht der zweiten Ausführungsform der Stange, gesehen von vorn; und
- Fig. 9: eine Ansicht der zweiten Ausführungsform der Stange des Ladesicherungssystems von der Stirnseite her gesehen.

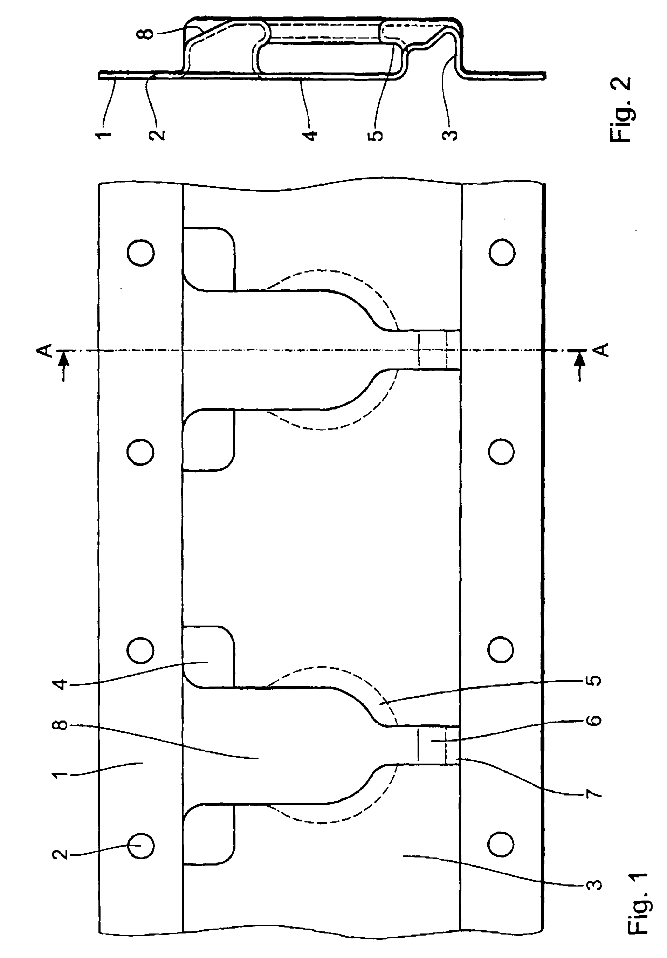

Ein Befestigungsmittel 3 ist beispielsweise durch Nieten 2 an einer Seitenwand 1 eines Laderaums befestigt. Das Befestigungsmittel 3 weist - in Frontansicht - u-förmige Ausnehmungen 4 mit einem Hinterschnitt 5 auf. An die Ausnehmung 4 schließt sich ein Ablauf 6, 7 an. Am oberen Bereich des Befestigungsmittels ist auf jeder Seite der Ausnehmung ein Abschnitt 8 vorgesehen, der bezüglich der Seitenwand geneigt ist. Das Befestigungsmittel weist ein in Fig. 2 gezeigtes Profil auf.

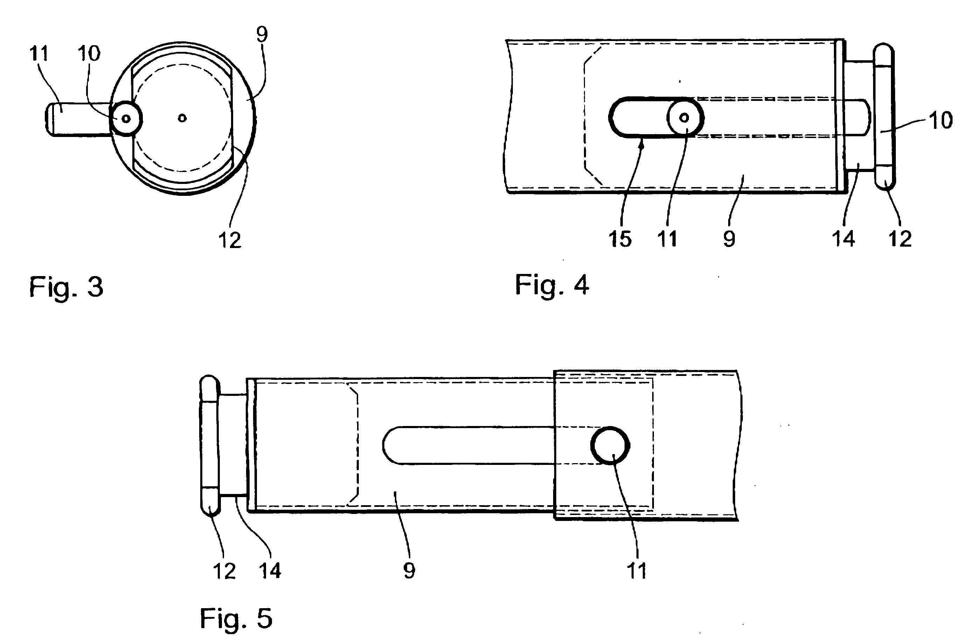

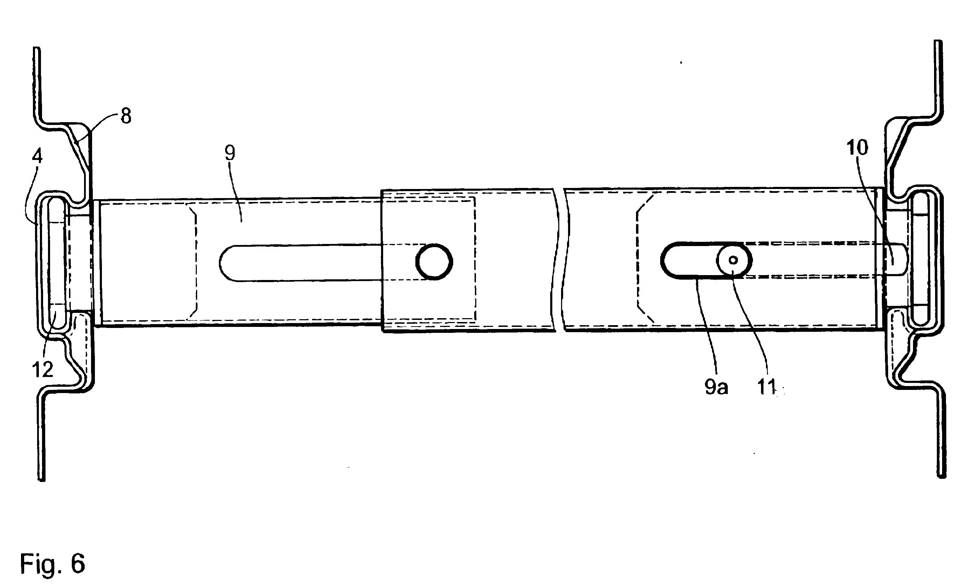

Eine Stange 9 gemäß einer ersten Ausführungsform, die in dem Befestigungsmittel 3 zu befestigen ist, weist einen länglichen Radialvorsprung 12 und ein Verriegelungsmittel 10, 11 auf, welches einen Riegel 10 enthält, der in Längsrichtung der Stange 9 verschiebbar in der Stange 9 plaziert ist, stirnseitig mit einem freien Ende an der Stange 9 austritt und einen zum Riegel 10 quer verlaufenden Entriegelungshebel 11 besitzt, der an einem Langloch 9a der Stange 9 austritt. Die Stange 9 weist an ihren Enden einen Abschnitt 14 mit einem kleineren Durchmesser auf, an dem wiederum der längliche Radialvorsprung 12 drehfest angebracht ist. Wie in Fig. 4 gezeigt, kann sich der Entriegelungshebel innerhalb eines Langloches 15 bewegen. Die Stange 9 wird, wie in Fig. 6 gezeigt, in den Befestigungsmitteln befestigt. Dabei befindet sich der Riegel 10 in seiner stirnseitig an der Stange 9 austretenden Einrastposition. Die Stange kann somit nur entfernt werden, wenn die Stange mittels des Entriegelungshebels 11 entriegelt wird, wenn also der Riegel axial zurückgezogen wird.

Zum Befestigen der Stange 9 in dem Befestigungsmittel 3 muss ein Ende der Stange 9 in der Längsrichtung des Radialvorsprungs 12 in die Ausnehmung 4 eingeführt werden. Beim Einführen der Stange in Längsrichtung des Radialvorsprungs befindet sich der Riegel 10 quer zu der Längsrichtung des Radialvorsprunges 12. Dabei wird der Riegel 10 mittels des Abschnittes 8 zwangsweise gegen die Wirkung einer Feder zurückgespannt. Der Riegel 10 befindet sich dann an einer zurückgezogenen Position, während sich der längliche Radialvorsprung der Stange 9 in der Ausnehmung befindet. Als nächstes wird die Stange um ca. 90° gedreht, was dazu führt, dass der längliche Radialvorsprung 12 in seiner Längsrichtung in die Taschen des Hinterschnittes 5 gedreht wird. Dabei wird der Riegel 10 ebenfalls um 90° gedreht und gelangt in eine zweite Position, die sog. Einrastposition. Durch das Einrasten des Riegels 10 in die Einrastposition wird verhindert, dass die Stange weiter gedreht werden kann. Da sich der längliche Radialvorsprung in seiner Längsrichtung in den Taschen des Hinterschnittes 5 befindet, kann die Stange nicht nach oben entfernt werden, da die Länge des länglichen Radialvorsprungs 12 in seiner Längsrichtung größer als die Breite der Ausnehmung 4 ist. Somit ist die Stange 9 in dem Befestigungsmittel 3 gesichert.

Die beiden Enden der Stange 9 müssen simultan in gegenüberliegende Ausnehmungen zweier Befestigungsmitteln eingeführt werden, die sich an horizontal gegenüberliegenden Stellen der Seitenwände 4 des Laderaums befinden.

Die Anzahl der verwendeten Stangen ist von der Bedienperson nach seinen Anforderungen freiwählbar. Mittels der an den Befestigungsmittel befestigten Stangen kann die Ladung des Laderaums vor einem Verrutschen gesichert werden. Da das Befestigungsmittel als Schiene ausgebildet ist und die Ausnehmungen in festgelegten Abständen angeordnet sind, können die Stangen variabel in dem Laderaum befestigt werden.

Zum Entfernen der Stange 9 aus dem Befestigungsmittel 3 muss die Bedienperson den Entriegelungshebel 1 1 betätigen, um den Riegel 10 aus der Einrastposition zu entfernen. Bei betätigten Entriegelungshebel 11 kann die Stange um 90° zurückgedreht werden, was dazu führt, dass der längliche Radialvorsprung 12 in seiner Längsrichtung aus den Taschen des Hinterschnittes 5 herausgedreht wird. Dann kann die Stange nach oben geschoben werden, um aus dem Befestigungsmittel 3 entfernt zu werden.

Wie aus der vorstehenden Beschreibung ersichtlich, ist das Befestigen der Stange 9 an dem Befestigungsmittel 3 sehr einfach auszuführen, da die Stange 9 lediglich mit ihren Enden in die Ausnehmung 4 eingeführt und gedreht werden muss.

Zum Reinigen des Laderaums und der Befestigungsmittel werden alle Stangen aus den Befestigungsmitteln entfernt. Eine Reinigungsflüssigkeit wird aufgetragen. Dabei kommt es an keiner Stelle der Befestigungsmittel zu Stauungen der Reinigungsflüssigkeit, da Abläufe 6, 7 in festgelegten Abständen vorgesehen sind. Die Reinigungsflüssigkeit kann durch die Ausnehmungen über die Abläufe komplett ablaufen und anschließend kann der Boden des Laderaums gereinigt werden. Somit wird eine gründliche Reinigung und Desinfektion ermöglicht.

Die Befestigungsmittel 3 sind in der dargestellten Ausführungsform als Schienen ausgebildet, die horizontal an den Seitenwänden des Laderaums befestigt sind und in vorgegebenem Abstand ihre Ausnehmungen 4 aufweisen, welche sich nach unten hin in offenen Ablaufrinnen fortsetzen.

Die zweite Ausführungsform der Stange 9 entspricht im wesentlichen der ersten Ausführungsform der Stange 9. Anstatt der Veriegelungsmittel 10, 11 weist die Stange 9 gemäß der zweiten Ausführungsform daher lediglich einen Hebel 11 auf, der quer zur Längsrichtung des Radialvorsprunges 12 angebracht ist. Damit die Stange 9 in die Ausnehmungen 4 eingeführt werden kann, muß der Hebel 1 parallel zur Ladefläche sein. Wenn die Stange eingeführt ist, kann die Stange losgelassen werden und durch das Gewicht des Hebels 11 wird die Stange um ca. 90° verdreht, so dass der Radialvorsprung 12 in den Hinterschnitt 5 hineingedreht wird und die Stange 9 somit gesichert ist.

Diese Ausführungsform dient dem vereinfachten Befestigen und Entfernen der Stange 9 in bzw. aus den Befestigungsmitteln. Alle vorstehend angeführten Punkte lassen sich auch auf die zweite Ausführungsform anwenden. In allen übrigen Merkmalen entspricht die zweite Ausführungsform der ersten Ausführungsform

## Patentansprüche

1. Ladesicherungssystem für Laderäume, insbesondere für Kühlladeräume von Fahrzeugen und/oder Containern, mit Befestigungsmitteln (3) im Laderaum, mindestens einer Stange (9), die an zwei gegenüberliegenden Befestigungsmitteln lösbar befestigt ist,
dadurch gekennzeichnet, daß die Befestigungsmittel mit Abläufen (6, 7) versehen sind, welche das Ablaufen oder Abtropfen von Flüssigkeit fördern.

2. Ladesicherungssystem nach Anspruch 1,
dadurch gekennzeichnet, daß die Befestigungsmittel an den Seitenwänden (4) des Laderaums angebracht sind.

3. Ladesicherungssystem nach Anspruch 1 oder 2,
dadurch gekennzeichnet, daß die Befestigungsmittel nach oben und zum Laderaum offene Ausnehmungen (4) aufweisen, in welche die Enden (12, 14) der Stangen (9) einsetzbar sind.

4. Ladesicherungssystem nach Anspruch 3,
dadurch gekennzeichnet, daß die Ausnehmungen (4) in ihren unteren Bereichen Hinterschnitte (5) aufweisen, und die Stangen (9) je einen länglichen Radialvorsprung (12) an ihren Enden aufweisen,
wobei die Länge des Radialvorsprungs (12) in seiner Längsrichtung größer als die Breite der Ausnehmung (4) und die Breite des Radialvorsprungs (12) quer zu seiner Längsrichtung kleiner als die Breite der Ausnehmungen (4) ist.

5. Ladesicherungssystem nach Anspruch 4,
dadurch gekennzeichnet, daß die Abläufe (6, 7) am unteren Bereich der Ausnehmung angeordnet sind.

6. Ladesicherungssystem nach Anspruch 4,
dadurch gekennzeichnet, daß die Abläufe (6, 7) rillenförmig nach unten verlaufen und offen sind.

7. Ladesicherungssystem nach einem der Ansprüche 4-6,
dadurch gekennzeichnet, daß ein Hebel (11) drehfest mit der Stange (9) verbunden ist.

8. Ladesicherungssystem nach einem der Ansprüche 4-6,
dadurch gekennzeichnet, daß der Hebel (11) quer zur Längsrichtung des Radialvorsprunges und quer zur Stangenlängsrichtung an der Stange angebracht ist.

9. Ladesicherungssystem nach einem der vorherigen Ansprüche,
dadurch gekennzeichnet, daß die Stangen je ein Verriegelungsmittel (10, 11) an ihren Enden aufweisen.

10. Ladesicherungssystem nach Anspruch 9,
dadurch gekennzeichnet, daß das Verrieglungsmittel (10, 11) einrastet, wenn die Enden der Stange in die Ausnehmung (4) eingeführt und die Stange (9) anschließend gedreht wird.

11. Ladesicherungssystem nach einem der Ansprüche 9-10,
dadurch gekennzeichnet, daß das Verriegelungsmittel einen mittels einer Feder vorgespannten Riegel (10) enthält, der mit einem Entrieglungshebel (11) verbunden ist,
wobei der Riegel (10) mit dem Entrieglungshebel (11) in der Querrichtung des Radialvorsprungs vorgesehen ist.

12. Ladesicherungssystem nach einem der Ansprüche 3-11,
dadurch gekennzeichnet, daß auf beiden Seiten jeder Ausnehmung (4) an der oberen Kante des Hutprofils ein Abschnitt (8) vorgesehen ist, der bezüglich der Seitenwand geneigt ist.

13. Ladesicherungssystem nach Anspruch 3,
dadurch gekennzeichnet, daß die Befestigungsmittel als Schienen ausgeführt sind, die im wesentlichen horizontal an den Seitenwänden des Laderaums befestigt sind, und die Ausnehmungen (4) in festgelegten horizontalen Abständen angeordnet sind.
